# EUROPEAN PATENT APPLICATION

(11) **EP 2 563 083 A1**
(43) Date of publication of application: **27.02.2013**
(21) Application number: 11306058.6
(22) Date of filing: 22.08.2011
(51) Int. Cl.: H04W 72/04

(54) **Apparatus and method for scheduling a mobile terminal**

(71) Applicant: Alcatel Lucent, 75007 Paris (FR)
(72) Inventor: Weber, Andreas, 74251 Lehrensteinsfeld (DE); Stanze, Oliver, 70499 Stuttgart (DE)
(74) Representative: 2SPL Patentanwälte

(57) **Abstract**

Embodiments relate to methods and apparatuses for scheduling a mobile terminal (11) associated to a serving cell (12; 22) of a cellular communication system, comprising classifying (51) the mobile terminal into a cell-center or cell-border mobile terminal (11-1; 11-2) based on a quality of a wireless communication channel between the mobile terminal and the serving cell (12; 22) and based on a quality of a wireless communication channel between the mobile terminal and a neighbor cell (18; 28), and scheduling (53) a classified cell-border mobile terminal (11-2) using radio resources (21) which are at least partially suspended from transmission by the neighbor cell (18; 28), and to schedule a classified cell-center mobile terminal (11-1) using radio resources (23) which are not suspended from transmission by the neighbor cell (18; 28).

## Description

Embodiments of the present invention generally relate to wireless communications and, more specifically, to methods and apparatuses for scheduling mobile terminals in inter-cell interference sensitive scenarios.

### Background

In nowadays mobile communication networks heterogeneous architectures become more and more important. Heterogeneous Networks (HetNets) are networks which utilize cell types of different sizes, as for example macrocells, picocells, and femtocells. Such cells are established by base stations for which their coverage areas are determined by their transmission power, antenna properties, and interference condition. Picocells and femtocells are cells having a smaller coverage area than macrocells. In some network scenarios the small cells' coverage area can be surrounded by the coverage area of a macrocell. The small cells can be deployed to extend the capacity of the network. With regard to standardization within the 3^{rd} Generation Partnership Project (3GPP), HetNets have been added to the scope of the Long Term Evolution-Advanced (LTE-A) work item. Since the cells or their serving base stations in such networks may utilize the same frequency resources such architectures may suffer from interference created by the overlapping coverage areas of these cells. Therefore enhanced Inter-Cell Interference Coordination (ICIC) for co-channel HetNet deployment is one of the key techniques for LTE Release 10 (Rel-10). Co-channel HetNets comprise macrocells and small cells operating on the same frequency channel. Such deployments present some specific interference scenarios for which ICIC techniques are utilized.

In one example scenario, the small cells are picocells, which are open to users of the macrocell network. In order to ensure that such picocells carry a useful share of the total traffic load, mobile terminals, also referred to as User Equipment (UE), may be programmed or configured to associate preferentially with the picocells rather than the macrocells, for example by biasing a Reference Signal Received Power (RSRP) at which they will select a picocell to associate with. Under such conditions, UEs near the edge of a picocell's coverage area may suffer strong interference from one or more neighboring or adjacent macrocells. In order to alleviate such interference, LTE-A introcudes a new ICIC feature called enhanced ICIC (eICIC) based on so-called Almost Blank Sub-frames (ABS). Here, some sub-frames may be configured as "blank" or "almost blank" in a macrocell. A blank sub-frame may contain no transmission from the macrocell, i.e., it neither contains data channels (e.g.. PDSCH = Physical Downlink Shared Channel) nor control channels (e.g. PDCCH = Physical Downlink Control Channel), while an "almost blank" sub-frame typically contains no data transmission and little or no control signaling transmission, but may contain reference signal transmissions in order to ensure backward compatibility with legacy terminals, which expect to find the reference signals for measurements but are unaware of the configuration of almost blank sub-frames. Almost blank sub-frames may also contain synchronization signals, broadcast control information and/or paging signals. The utilization of "blank" or "almost blank" sub-frames may enable reduced or even suppressed interference from the corresponding macrocell for the picocell within these sub-frames. Hence, "blank" or "almost blank" sub-frames (ABSs) may be regarded as sub-frames or radio resources during which at least some radio resources are suspended from transmission (note that hereafter the term "ABS" is used, and should be understood to include both blank and almost blank sub-frames).

However, to make use of blank or almost blank sub-frames effectively, signaling is needed from the macrocell to the picocell, e.g. across the corresponding backhaul interface, known in LTE as the "X2" interface. For LTE Release 10, it has been agreed that this X2 signaling will take the form of a coordination bitmap to indicate the ABS pattern (for example with each bit corresponding to one sub-frame in a series of sub-frames, with the value of the bit indicating whether the sub-frame is an ABS or not). Such signaling can help the picocell to schedule data transmissions in the picocell appropriately to avoid interference, and to signal to its associated UEs the sub-frames which should have low macrocellular interference and should therefore be used for measurements. Examples for such measurements are measurements for Radio Resource Management (RRM), which typically relate to handover, measurements for Radio Link Monitoring (RLM), which typically relate to detection of serving radio link failure, and measurements for Channel State Information (CSI), which typically relate to link adaptation on the serving radio link. In such an example scenario, Radio Resource Control (RRC) signaling can be utilized to indicate to the UEs the set of sub-frames which they should use for measurements (e.g., for RLM/RRM or CSI), where RRC is a signaling protocol standardized by 3GPP for control and configuration signaling.

Another example scenario can arise with HetNets in which the small cells are femtocells, which operate on a Closed Subscriber Group (CSG) basis, and are therefore typically not open to users of the macrocellular network. In this case, the femtocells can cause strong interference to the macrocell UEs when these macrocell UEs come close to the femto base station transceivers, however, without having the possibility to associate with them. It may then be beneficial for the macrocells to indicate to their UEs the sub-frames in which they should make resource specific measurements, i.e. the sub-frames in which interference from one or more femtocells is reduced or absent, e.g. because the femtocell send ABS in these subframes. In the following, to a base station transceiver may also be referred to as eNodeB (eNB) according to the 3GPP terminology.

In all example scenarios the interference level for mobile terminals highly depends whether a neigboring interfering cell is currently blanking (i.e. sends an ABS) or not. Due to these varing interference levels the mobile terminals may be configured to generate independent Channel Quality Indicator (CQI) feedbacks for sub-frames at which neighboring cells are blanking or not. This enables a serving eNB to exploit the varying interference levels. Mobile terminals, which highly suffer from interference of a certain neigboring or overlapping cell, should be preferably scheduled if this neigboring cell sends an ABS.

An obvious solution may be to configure every mobile terminal to measure and report independent CQI values for sub-frames where the strongest neighbor cell blanks, i.e. sends ABS, as well as for sub-frames during which the strongest neigbor cell transmits on control and data channels (i.e. sends non ABS). However, this solution generates a high amount of CQI feedback on the uplink.

### Summary

Embodiments may be based on the finding that mobile terminals associated with a serving base station of a radio cell of a cellular wireless communication system may be classified or divided into mobile terminals located closer to the cell center (cell-center mobile terminals) with respect to their experienced signal strengths and mobile terminals located closer to the cell border or edge (cell-border mobile terminals) with respect to their experienced signal strengths. Thereby, cell-center mobile terminals being farther way from a neighboring base station will typically experience less interference from the neighboring base station than cell-border mobile terminals located closer to said neighboring base station. For that reason a downlink (and/or uplink) communication between the cell's serving base station and cell-center mobile terminals may be scheduled using radio resources which are not suspended from transmission by an interfering neighbor cell having an overlapping coverage area. On the other hand, a downlink (and/or uplink) communication between the cell's serving base station and cell-border mobile terminals may be scheduled using radio resources which are suspended from transmission by an interfering neighbor cell, leading to an enhanced Inter-Cell Interference Coordination (eICIC) concept between neighboring interfering radio cells.

Embodiments provide an ICIC apparatus for scheduling a mobile terminal associated to a serving radio cell of a cellular communication system, the apparatus comprising classification means adapted to classify the mobile terminal into a cell-center or cell-border mobile terminal based on a quality of a wireless communication channel between the mobile terminal and the serving cell, and based on a quality of a wireless communication channel between the mobile terminal and a neighbor cell. Channel quality measurements related to a classified cell-center mobile terminal may thereby indicate a lower interference level of the (interfering) neighbor cell or a higher Signal-to-Interference Ratio (SIR) between the serving cell and the (interfering) neighbor cell compared to channel quality measurements related to a classified cell-border mobile terminal. Hence, classified cell-border mobile terminals typically experience a lower SIR than classified cell-center mobile terminals. In an exemplary scenario this may be the case when a classified cell-center mobile terminal is located within a geographical center or inner area which is closer to the cell's serving base station than a geographical border or edge area of the cell in which a classified cell-border mobile terminal is located. The apparatus further comprises scheduling means adapted to schedule a classified cell-border mobile terminal using radio resources which are at least partially suspended from transmission by the neighbor or overlapping cell, and to schedule a classified cell-center mobile terminal using radio resources which are not suspended from transmission by the neighbor or overlapping cell.

Some embodiments of the present invention may augment the concept such that channel measurement feedback in the uplink, i.e. in the direction from a mobile terminal to a serving base station or cell, may be further reduced by scheduling the mobile terminals based on measurements, e.g. channel quality measurements, carried out by the cell-border mobile terminals using the radio resources which are suspended from transmission by the interfering neighbor cell, and measurements carried out by the cell-center mobile terminals using the radio resources which are not suspended from transmission by the interfering neighbor cell. By subdividing the mobile terminals associated to a serving cell into cell-center and cell-edge mobile terminals a channel measurement feedback rate may ideally be reduced to 50% compared to aforementioned conventional concepts.

For that purpose some embodiments of the present invention provide an apparatus for scheduling a mobile terminal associated to a radio cell of a cellular communication system, wherein the apparatus comprises classification means (i.e. a classifier) being adapted to classify the mobile terminal into a cell-center or cell-border mobile terminal. The apparatus further comprises measurement configuration means (i.e. a measurement configurator) being adapted to configure a classified cell-border mobile terminal to perform measurements using radio resources which are at least partially suspended from transmission by a neighbor cell, and to configure a classified cell-center mobile terminal to perform measurements using radio resources which are not suspended from transmission by the neighbor cell. Further, scheduling means (i.e. a scheduler) are provided being adapted to schedule the cell-border mobile terminal and the cell-center mobile terminal based on the performed measurements, for example, such that a classified cell-border mobile terminal is scheduled using the radio resources which are at least partially suspended from transmission by the neighbor cell, and such that a classified cell-center mobile terminal is scheduled using the radio resources which are not suspended from transmission by the neighbor cell.

The classification means may be adapted to classify a mobile terminal based on a parameter called Cell Border Window (CBW), similar to a handover procedure, wherein a handover decision in a handover preparation procedure is typically made by a RRM function based on a measurement report from the UE. For this, three parameters threshold, hysteresis, and Time-To-Trigger (TTT) may be properly combined to build a handover criterion. First of all, the need for the handover arises when the Received Signal Strength (RSS) of the serving eNB becomes less than that of a neighbor eNB. In the case of a usual handover decision scheme, if the candidate target eNB holds higher RSS than that of the serving eNB during a period of TTT, a hysteresis operation for the detected situation should be considered. A well-established hysteresis and TTT can provide exact and efficient decisions based on the UE's measurement information in the handover preparation procedure. Similarly, a mobile terminal may be classified as a cell-center mobile terminal, if a Receive Signal Strength (RSS) of the serving cell at the mobile terminal is higher than a receive signal level of the strongest interfering neighbor cell by a predetermined value (and possibly for a predetermined time). Otherwise the mobile terminal is classified as a cell-border mobile terminal. Hence, the measurements may e.g. correspond to intra-frequency CSI or CQI measurements of a wireless channel between the serving base station and an associated mobile terminal. CQI is a measurement of the communication quality of wireless channels. CQI can be a value (or values) representing a measure of channel quality for a given channel. Typically, a high value CQI is indicative of a channel with high quality and vice versa. A CQI for a channel can be computed by making use of performance metric, such as a Signal-to-Noise Ratio (SNR), Signal-to-Interference plus Noise Ratio (SINR), Signal-to-Noise plus Distortion Ratio (SNDR), etc., of the channel. These values and others can be measured for a given channel and then used to compute a CQI for the channel. The CQI for a given channel can be dependent upon the transmission (modulation) scheme used by the communications system. For example, a communications system using Code-Division Multiple Access (CDMA) can make use of a different CQI than a communications system that makes use of Orthogonal Frequency Division Multiplexing (OFDM). In more complex communications systems, such as those making use of Multiple-Input Multiple Output (MIMO) and space-time coded systems, the CQI used can also be dependent on receiver type, thus being a sub-optimal measure for handover in such systems.

As the mobile terminals in the radio cell are not statically distributed due to their movements, respectively, the classification procedure may be performed continuously, i.e. dynamically. For example, all associated mobiles may be classified at a predefined time interval, which may be in the order of seconds or minutes, depending on the cell topology and/or its location.

A mobile terminal may be configured to transmit measurement reports carrying information on the receive signal level of the serving cell and/or on the receive signal level of the strongest interfering neighbor cell, similar to handover measurement reports. The serving base station may then, according to one embodiment, base its classification decision on the measurement reports received from its associated mobile terminals. In other embodiments the mobile station may perform its classification on its own, based on its RLM, RRM or CSI measurements. That is to say, the mobile terminal may decide on its own whether it is supposedly located in the cell-center region or in the cell-border region of its associated cell. In such embodiments the mobile terminal may inform the serving cell about its decision by transmitting a corresponding signal to the serving base station (e.g. "0" = cell-center mobile, "1" = cell-edge mobile). According to embodiments the classification means may, hence, be adapted to receive a report from an associated mobile terminal, the report being indicative of the mobile terminal's change from a classified cell-center mobile terminal to a classified cell-border mobile terminal. This information may, in some cases, also be indicative of the mobile terminal's change from the serving cell's geographical center area to the geographical border area, or vice versa.

According to embodiments the scheduling means may be adapted to schedule a classified cell-border mobile terminal using the radio resources which are at least partially suspended from transmission by the neighbor cell and to schedule a classified cell-center mobile terminal using the radio resources which are not suspended from transmission by the neighbor cell. Further, the measurement configuration means may be adapted to configure the cell-border mobile terminal to perform channel quality measurements using the radio resources which are at least partially suspended from transmission by the neighbor cell, the channel quality measurements being indicative of a quality of a wireless channel between the cell-border mobile terminal and the cell's serving base station, and to configure the cell-center mobile terminal to perform channel quality measurements using the radio resources which are not suspended from transmission by the neighbor cell, the channel quality measurements being indicative of a quality of a wireless channel between the cell-center mobile terminal and the cell's serving base station. That is to say, in some embodiments related to enhanced ICIC for LTE-A systems, only cell border mobiles may be scheduled during sub-frames blanked (ABS) by the neighbor cell, based on CQI feedback measured during ABS of the neighbor cell. Likewise, only cell-center or cell-inner mobiles may be scheduled during subframes not blanked (non-ABS) by the neighbor cell, based on the CQI feedback measured during non-ABS by the neighbor cell.

In embodiments the neighbor cell may correspond to the strongest interfering cell neighboring or geographically overlapping the serving cell, wherein an interference level for the cell-center or cell-border mobile terminals originating from signals of the strongest interfering cell is higher than an interference level of another neighboring cell. Different scenarios are conceivable. For example, the neighbor or overlapping cell may be a marcocell, while the serving cell may be a pico- or femtocell, or vice versa. This may e.g. be the case in a co-channel HetNet, as has been described above. In some embodiments the neighboring cell may also be an overlay cell which operates at a different frequency channel or band and has an overlapping geographical coverage area.

According to embodiments the radio resources (which are at least partially suspended from transmission) may comprise frequency and/or time resources utilized by the neighbor cell. This may be the case for various wireless communication techniques, in particular for OFDM (Orthogonal Frequency-Division Multiplexing) based communication system, like, e.g. LTE, LTE-A or WLAN (Wireless Local Area Network). In embodiments related to the aforementioned enhanced ICIC using "blank" or "almost blank" sub-frames (ABS) the time resources may correspond to a plurality of sub-frames of a radio frame structure, and the radio resources which are at least partially suspended from transmission correspond to sub-frames during which at least some of the radio resources of the neighbor cell are suspended from transmission, i.e. ABS. In other words, the radio resources which are at least partially suspended from transmission may correspond to an ABS pattern utilized by the neighbor cell. Hence, the scheduling means may be adapted to schedule the classified cell-border mobile terminal during ABS sub-frames of the neighbor cell and to schedule the classified cell-center mobile terminal during non-ABS sub-frames of the neighbor cell. Apart from frequency and/or time resources also other additional or alternative radio resources are conceivable, as, for example, code sequences, which may be used in CDMA-based systems.

Further embodiments also provide a mobile terminal for a cellular communication system, the mobile terminal comprising measurement means (i.e. a measurer) adapted to perform measurements using radio resources which are at least partially suspended from transmission by a neighbor cell if the mobile terminal has been classified as a cell-border mobile terminal, and to perform measurements using radio resources which are not suspended from transmission by the neighbor cell if the mobile terminal has been classified as a cell-center mobile terminal, wherein a classified cell-center mobile terminal is located within a center area which is, with respect to measured signal strengths of serving and neighbor cell, closer to the cell's serving base station than a border area of the cell in which a classified cell-border mobile terminal is located, and communication means (i.e. a communicator) adapted to communicate information indicative of the measurements and/or the classification from the mobile terminal the cell's serving base station.

The mobile terminal may be classified as a cell-center mobile terminal, if a receive signal level of the serving cell at the mobile terminal is higher than a receive signal level of the strongest interfering neighbor cell by a predetermined value, or classified as a cell-border mobile terminal otherwise. The communication means may be adapted to transmit a report from the mobile terminal to its serving cell, the report being indicative of the mobile terminal's change from a classified cell-center mobile terminal to a classified cell-border mobile terminal, or vice versa.

Embodiments also provide methods which may be carried out by the apparatuses and/or mobile terminals. Hence, exemplary embodiments provide a method for scheduling a mobile terminal associated to a cell of a cellular communication system, comprising classifying the mobile terminal into a cell-center or cell-border mobile terminal, and scheduling a classified cell-border mobile terminal using radio resources which are at least partially suspended from transmission by a neighbor cell, and to schedule a classified cell-center mobile terminal using radio resources which are not suspended from transmission by the neighbor cell.

Yet further exemplary embodiments also provide a method for scheduling a mobile terminal associated to a serving cell of a cellular communication system, the method comprising a step of classifying the mobile terminal into a cell-center or cell-border mobile terminal based on a quality of a wireless communication channel between the mobile terminal and the serving cell's base station and based on a quality of a wireless communication channel between the mobile terminal and a neighbor cell's base station. The quality of a wireless communication channel may be determined based on (measured) signal strengths of the serving cell and a neighbor cell received at the location of the mobile terminal. The method further comprises a step of configuring a classified cell-border mobile terminal to perform measurements using radio resources which are at least partially suspended from transmission by the neighbor cell, and to configure a classified cell-center mobile terminal to perform measurements using radio resources which are not suspended from transmission by the neighbor cell. The cell-border mobile terminal and the cell-center mobile terminal are scheduled based on the performed measurements, respectively.

Some embodiments comprise a digital control circuit installed within the apparatus for performing the method for scheduling a mobile terminal. Such a digital control circuit, e.g. a digital signal processor (DSP), needs to be programmed accordingly. Hence, yet further embodiments also provide a computer program having a program code for performing embodiments of the method, when the computer program is executed on a computer or a digital processor.

One benefit of embodiments is that a CQI feedback rate transmitted on the uplink from the mobile terminals to the serving cell may be reduced to 50% compared to conventional concepts. Additionally or alternatively, the scheduler may provide a good downlink performance.

### Brief description of the Figures

Some embodiments of apparatuses and/or methods will be described in the following by way of example only, and with reference to the accompanying figures, in which
- Fig. 1: shows a schematic block diagram of an exemplary apparatus for scheduling a mobile terminal associated to a cell of a cellular communication system;
- Fig. 2: illustrates the principle of an embodiment related to ABS-based eICIC;
- Fig. 3: illustrates adjustable parameters for embodiments of the present invention;
- Fig. 4: illustrates performance gains, which may be achieved with embodiments of the present invention; and
- Fig. 5: shows a schematic flow-chart of an exemplary method for scheduling a mobile terminal associated to a cell of a cellular communication system.

### Description of Embodiments

Various example embodiments will now be described more fully with reference to the accompanying drawings in which some example embodiments are illustrated. In the drawings, the thicknesses of layers and/or regions may be exaggerated for clarity.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

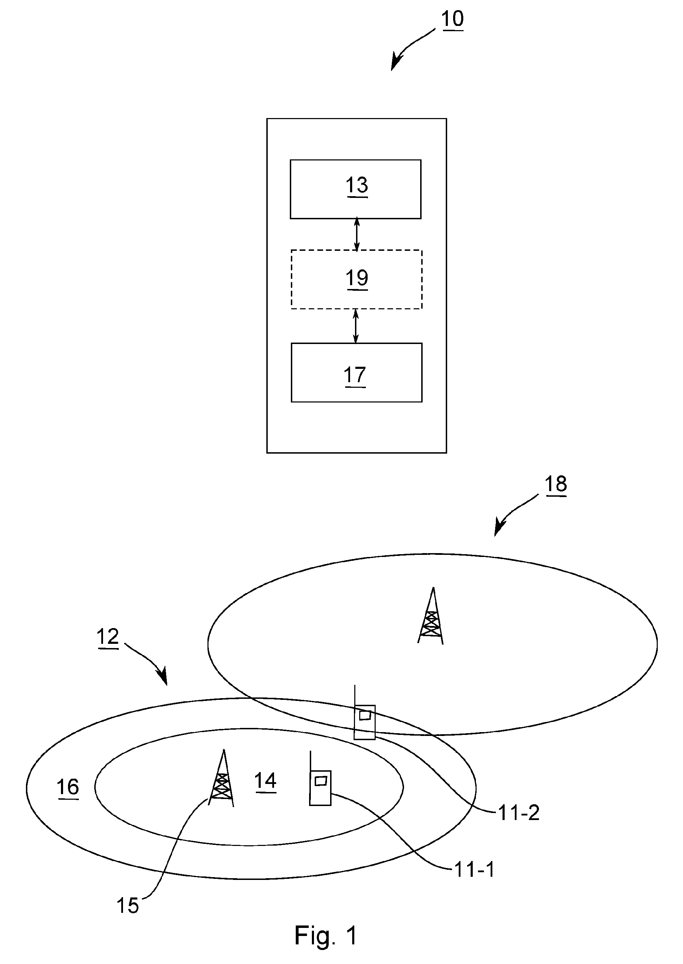

Fig. 1 schematically shows a block diagram of an apparatus 10 for scheduling a mobile terminal 11-1 and/or 11-2 associated to a serving radio cell 12 of a cellular communication system or network, according to an embodiment. It is to be noted that the apparatus 10 may, for example, be incorporated in a base station of the cellular communication system. The apparatus may, however, also be realized as a decentralized or centralized RRM entity.

The apparatus 10 comprises classification means 13 being configured to classify the mobile terminals 11-1, 11-2 into cell-center or cell-border mobile terminals, wherein a classified cell-center mobile terminal 11-1 may be located within a geographical center area 14 which is closer to the cell's 12 serving base station 15 than a geographical border area 16 in which a classified cell-border mobile terminal 11-2 may be located. However, the classification means 13 is adapted to classify the mobile terminal based on a quality of a wireless communication channel between the mobile terminal 11 and the serving cell 12, and based on a quality of a wireless communication channel between the mobile terminal 11 and a neighbor cell 18. For example, the classification means 13 may be adapted to classify the mobile terminal based on a comparison of measured signal strengths of the serving cell 12 and a neighbor cell 18 at the geographical location of the mobile terminal. Therefore, scenarios are conceivable wherein cell-center or cell-border mobile terminals are not located within geographical center or border areas of the cell. The apparatus 10 further comprises, coupled to the classification means 13, scheduling means 17 being configured to schedule a classified cell-border mobile terminal 11-2 using radio resources which are at least partially suspended from transmission by the neighbor (overlapping) cell 18, and to schedule a classified cell-center mobile terminal 11-1 using radio resources which are not suspended from transmission by the neighbor cell 18. Thereby, scheduling is to be understood as a method or rule by which mobile terminals are given access to radio resources (e.g. timeslots, frequency sub-carriers, pseudo-random codes, etc.). This is usually done to load balance a wireless system effectively or achieve a target quality of service.

Thereby the neighbor cell 18 may be a strongest interfering cell, i.e., the neighbor cell 18 may correspond to the strongest interfering cell neighboring or overlapping the serving cell 12, wherein an interference level for the cell-center or cell-border mobile terminals 11-1, 11-2 originating from signals of the strongest interfering cell 18 is higher than an interference level of another neighboring cell (not shown).

According to some embodiments, the cell 12 and the neighbor cell 18 may be radio cells of differing size in a HetNet, in particular a co-channel HetNet as specified by the LTE Release 10. For example, the serving cell 12 may be a picocell, while the interfering neighbor cell 18 may be an overlapping macrocell. A picocell may be regarded as a small cellular base station typically covering a small area, such as in-building (offices, shopping malls, train stations, etc.), or more recently in-aircraft. In cellular networks, picocells are typically used to extend coverage to indoor areas where outdoor signals do not reach well, or to add network capacity in areas with very dense phone usage, such as train stations. Picocells provide coverage and capacity in areas difficult or expensive to reach using the more traditional macrocell approach. In contrast, a macrocell is a cell in a mobile phone network that provides radio coverage served by a high power cellular base station (tower). Generally, macrocells provide coverage larger than picocells. The antennas for macrocells are mounted on ground-based masts, rooftops and other existing structures, at a height that provides a clear view over the surrounding buildings and terrain. Macrocell base stations have power outputs of typically tens of watts. Hence, the cellular communication system may be a HetNet based on LTE or LTE-A and the neighbor cell 18 may be a macrocell overlapping the serving picocell 12, or vice versa. Of course, also other network scenarios, particularly as described in the introductory portion, are conceivable for embodiments of the present invention.

Optionally, the apparatus 10 may further comprise measurement configuration means 19 (i.e. a measurement configurator) adapted to configure a classified cell-border mobile terminal 11-2 to perform measurements using radio resources which are at least partially suspended from transmission by the (interfering) neighbor cell 18, and to configure a classified cell-center mobile terminal 11-1 to perform measurements using radio resources which are not suspended from transmission by the neighbor cell 18. Compared to conventional concepts described in the introductory portion, such an embodiment may advantageously reduce the measurement report feedback in the uplink from the mobile terminals 11-1, 11-2 to their serving base station 15. The measurement configuration means 19 may be coupled in between the classification means 13 and the scheduling means 17, as it is exemplarily illustrated in Fig. 1.

In order to perform RLM, RRM or CSI/CQI measurements required by some embodiments, a mobile terminal 11-1 or 11-2 may comprise measurement means, e.g. in form of measurement circuitry, adapted to perform channel quality measurements related to the wireless channel between the mobile terminal and its serving base station 15 using the radio resources which are at least partially suspended from transmission by the neighbor cell 18, if the mobile terminal has been classified as a cell-border mobile terminal 11-2. If the mobile terminal has been classified as a cell-center mobile terminal 11-1, however, it shall perform measurements using radio resources which are not suspended from transmission by the neighbor cell 18. Further, the mobile terminal 11-1, 11-2 may comprise communication means adapted to communicate information indicative of the measurements from the mobile terminal to the cell's serving base station 15. Thereby the communication means may be realized by corresponding digital baseband and digital/analog RF (Radio Frequency) circuitry. The mobile terminal's communication means may be adapted to send or transmit a report to the associated serving base station 15, the report being indicative of the mobile terminal's 11-1, 11-2 change from a classified cell-center mobile terminal 11-1 to a classified cell-border mobile terminal 11-2. Sometimes this report may also be indicative of the mobile terminal's 11-1, 11-2 change from the serving cell's geographical center 14 area to the geographical border area 15, or vice versa.

Although various embodiments may in principle relate to different wireless communication network technologies, such as 2^{nd} generation mobile communication systems (e.g. GSM/EDGE systems based on TDMA/FDMA radio access technologies) or 3^{rd} generation mobile communication systems (e.g. UMTS systems based on CDMA radio access technologies), some embodiments may relate to enhanced ICIC for HetNets, which have been added to the scope of the 4^{th} generation Long Term Evolution-Advanced (LTE-A) work item. Such embodiments may provide a scheduling concept for "blank" or "almost blank" sub-frames (ABSs) based eICIC. In such embodiments the radio resources which are at least partially suspended from transmission correspond to ABS, while the radio resources which are not suspended from transmission correspond to non-ABS. Here, the following steps may be performed:
1) Mobile classification
   - Classify all mobiles 11-1, 11-2 into cell-center and cell-border mobiles. The classification of a mobile may be done dynamically.
2) Measurement configuration
   - Configure cell-border mobiles 11-2 so, that they measure the channel quality only during subframes that are blanked by the strongest neighbor cell 18.
   - Configure cell-center mobiles 11-1 so, that they measure the channel quality only during subframes that are not blanked by the strongest neighbor cell 18.
3) Resource scheduling
   - Based on the CQI feedback measured during subframes blanked by the neighbor cell 18, schedule only cell-border mobiles 11-2 during subframes blanked by the neighbor cell 18.
   - Based on the CQI feedback measured during subframes not blanked by the neighbor cell 18, schedule only cell-center mobiles 11-1 during subframes not blanked by the neighbor cell.

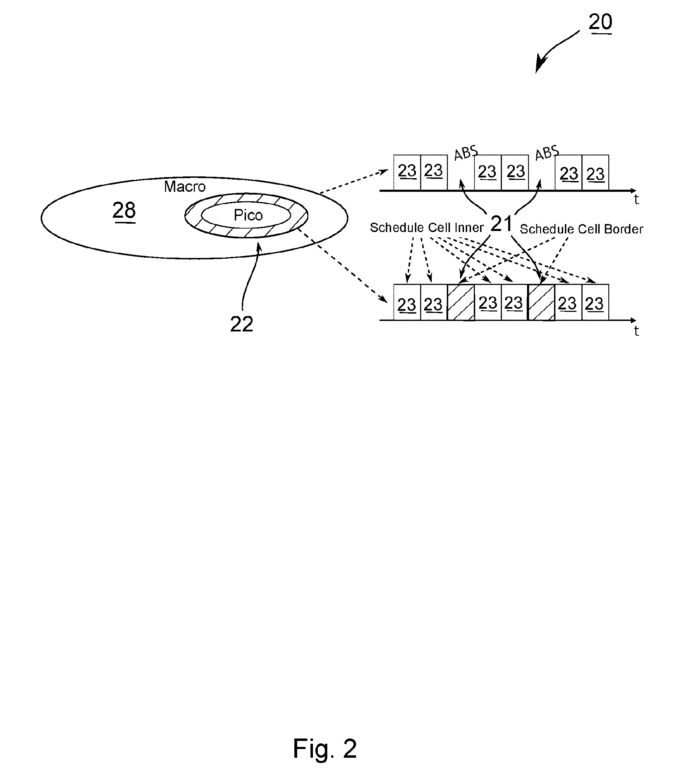

Turning now to Fig. 2, a picocell 22 of a HetNet is located in a geographical area covered by an overlapping macrocell 28. Using a configurable frame or subframe pattern, a radio frame 20 is divided into a plurality of subframes 21, 23. That is to say, the radio resources may comprise frequency and/or time resources utilized by the neighbor macrocell 28. The frame 20 is exemplary shown with eight subframes, but may include any number of subframes. The subframes include a first type of subframe 21 and a second type of subframe 23. The first type of subframe 21 may be a blank subframe, almost-blank subframe, or a blank Multicast Broadcast Single Frequency Network (MBSFN) subframe. The second type of subframe 23 may be a non-MBSFN subframe or a sub-frame that is not blank or almost blank. Hence, the time resources correspond to a plurality of sub-frames 21, 23 of a radio frame structure 20 and the radio resources which are at least partially suspended from transmission correspond to sub-frames 21 during which at least some of the radio resources of the neighbor cell 28 are suspended from transmission (ABS). The macrocell 28 transmits during non-ABS frames 23 and does not transmit a PDCCH (Physical Downlink Control Channel) and a PDSCH (Physical Downlink Shared Channel) during ABS frames 21. Furthermore, Fig. 2 shows that inside the pico-cell the ABS frames 21 are used by cell-border mobiles 11-2, while non-ABS frames 23 are used by cell-center mobiles 11-1, which means that the scheduling means 17 may be adapted to schedule the classified cell-border mobile terminal 11-2 during ABS sub-frames of the neighbor cell 28 and to schedule the classified cell-center mobile terminal 11-1 during non-ABS sub-frames of the neighbor cell 28.

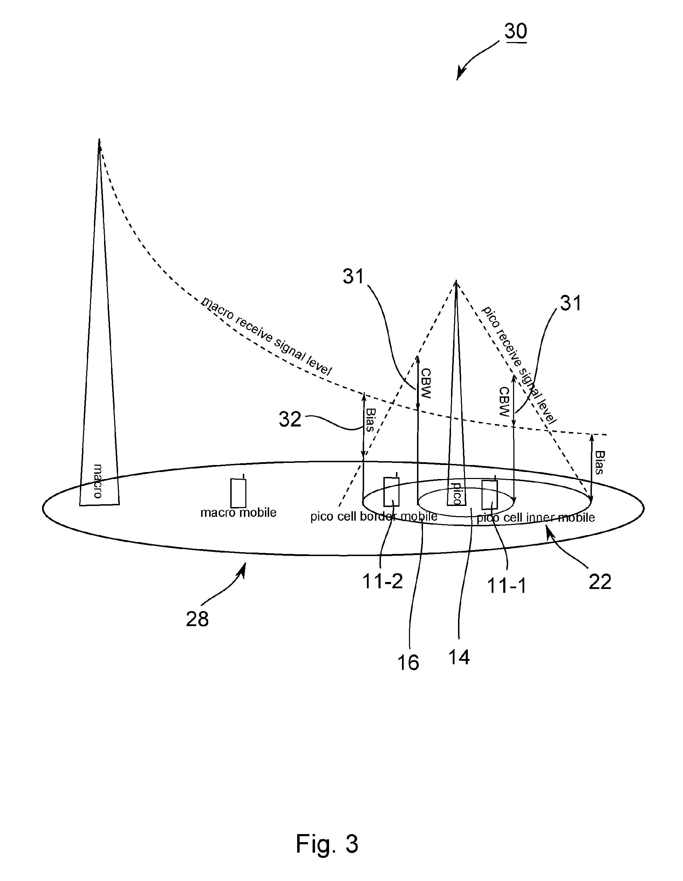

Fig. 3 illustrates a classification of picocell mobile terminals into cell-center and cell-border mobile terminals 11-1, 11-2, respectively. This may, for example, be done based on a parameter called Cell Border Window (CBW, reference numeral 31). If a receive signal level of a downlink signal from the serving picocell 22 is stronger than a receive signal level of the strongest interferer (in the HetNet case this may be a macrocell 28) plus a value corresponding to the CBW 31, a picocell mobile terminal may be classified as cell-center mobile terminal 11-1, otherwise it is classified as cell-border mobile terminal 11-2. Hence, the classification means 13 may be adapted to classify a mobile terminal 11 as a cell-center mobile terminal 11-1, if measurements related to a wireless communication channel between the mobile terminal and the serving cell 22 and related to a wireless communication channel between the mobile terminal and the neighbor cell 28 indicate a Signal-to-Interference Ratio (SIR) between the serving cell 22 and the (interfering) neighbor cell 28 above a given threshold, and to classify the mobile terminal as a cell-border mobile terminal otherwise. More particularly, the classification means 13 may be adapted to classify a mobile terminal as a cell-center mobile terminal, if a receive signal level of the serving cell 22 at the mobile terminal is exceeds a receive signal level of the strongest interfering neighbor cell 28 by a predetermined value CBW, and to classify the mobile terminal as a cell-border mobile terminal otherwise.

According to embodiments the mobile terminal may be configured to send a handover measurement report to its serving base station when it moves from inner cell 14 to border region 16 and vice versa. The classification means 13 may therefore be adapted to receive a measurement report from an associated mobile terminal, the measurement report being indicative of the mobile terminal's change from a classified cell-center mobile terminal 11-1 to a classified cell-border mobile terminal 11-2, or vice versa.

Based on this mobile terminal classification, a picocell mobile terminal may be configured to measure a channel quality (related to the wireless channel between the picocell mobile terminal 11 and its serving picocell 22) for their CQI feedback either during ABS (picocell border mobiles) or non-ABS (picocell center mobiles) of the strongest interfering macro cell 28. In other words, the measurement configuration means 19 may be adapted to configure a classified cell-border mobile terminal 11-2 to perform channel quality measurements using radio resources which are at least partially suspended from transmission by the neighbor cell 28 (i.e. ABS), and to configure a classified cell-center mobile terminal 11-1 to perform channel quality measurements using radio resources which are not suspended from transmission by the neighbor cell 28 (i.e. non-ABS). Thereby the channel quality measurements are indicative of a quality of a wireless channel between the respective mobile terminal 11-1, 11-2 and the cell's serving base station.

Another important parameter is the bias 32, which defines the cell border between pico- and macrocell 22, 28. If a receive signal level of the serving picocell 22 becomes weaker than a receive signal level of the strongest interfering macrocell 28 minus a value corresponding to the bias 32, then the mobile terminal 11-2 crosses the boundary between pico- and macrocell 22, 28.

Scheduling may be performed on two candidate lists of mobile terminals, namely the list of cell-center mobile terminals 11-1 and the list of cell-border mobile terminals. Based on these two lists, a plurality of various schedulers (e.g. round robin or proportional fair) may be employed.

According to some embodiments the employed ABS pattern, the cell border window 31 and the bias 32 may be dynamically adapted to the mobile terminal distribution and the traffic conditions within the serving cell and/or the neighbor cell. This may enable optimized resource utilization. For example, if there are too many cell-border terminals registered in the serving picocell 22, the CBW 31 may be lowered, thereby downsizing the cell-border region 16 (at the same time increasing the cell-center region 14). A similar effect could be reached by increasing the amount of ABSs in order to be able to schedule a larger amount of cell-border mobile terminals 11-2 and to increase the system performance. If the neighbor cell experiences a lack of capacity it could reduce the amount of ABS.

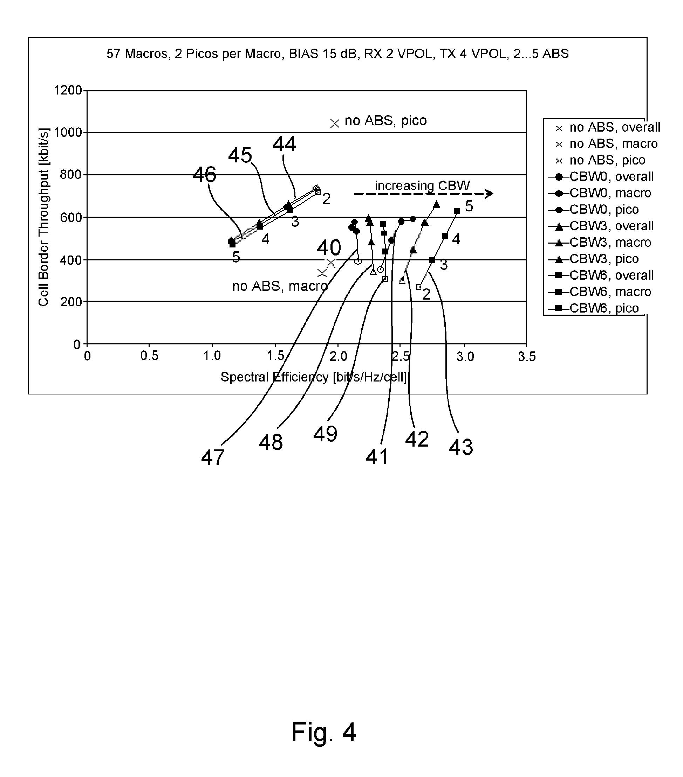

Fig. 4 shows a comparison of cell border throughput over spectral efficiency of a cellular communication system with and without ABS-based eICIC.

Fig. 4 illustrates simulation results for a cell-border throughput in kbit/s versus spectral efficiency in bit/s/Hz/cell for a picocell (see curves with reference numerals 41, 42, 43), a macrocell (see curves with reference numerals 44, 45, 46), and overall (see curves with reference numerals 47, 48, 49), for different values of CBW (0dB, 3dB, 6dB) and a varying number of ABS per ABS period. The dots correspond to number of ABS (2, 3, 4, 5) per ABS period (10ms). The transparent dots correspond to 2 ABS per 10ms ABS period.

It may be derived from Fig. 4 that throughput and spectral efficiency for picocell-border mobile terminals may both be increased with increasing CBW and an increasing number of ABS. At the same time, cell-border throughput and spectral efficiency decreases in the interfering macrocell. Overall, i.e., regarding both picocell and macrocell, and given a predefined CBW value, the cell-border throughput may be increased at nearly constant spectral efficiency by increasing the number of ABS. As may be derived from curves 47, 48, and 49, the cell-border throughput as well as the spectral efficiency may be improved in relation to the case where no ABS scheduling is performed (see reference numeral 40). For ABS, a high bias of 15 dB has been chosen, in order to push many mobiles into the pico cell. For the non-ABS case, the bias is 0dB in order to avoid bad channel qualities for picocell border mobiles. Based on the described ABS scheduling concept, gains of 50% in cell border throughput and 20% in spectral efficiency may be obtained.

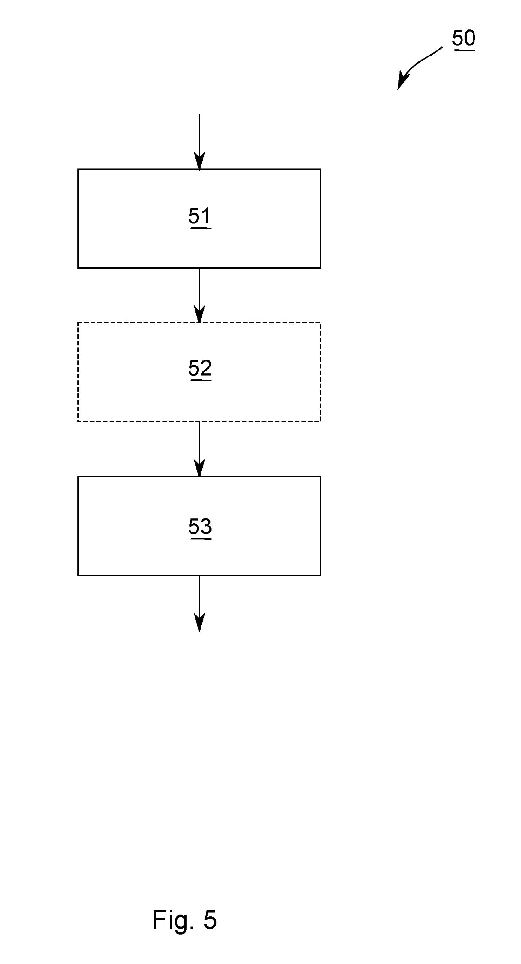

For the sake of completeness is shall also be emphasized that embodiment of the present invention also comprise methods which may be carried out by the apparatus 10 or a mobile terminal 11. As illustrated by Fig. 5, a method 50 for scheduling a mobile terminal 11 is provided, the method comprising a step 51 of classifying the mobile terminal into a cell-center or cell-border mobile terminal 11-1 or 11-2. A classified cell-border mobile terminal 11-2 is scheduled (step 53) using radio resources 21 which are at least partially suspended from transmission by a neighbor cell 18, 28. A classified cell-center mobile terminal 11-1 is scheduled using radio resources 23 which are not suspended from transmission by the neighbor cell 18, 28. After the step 51 of classifying and before the step 53 of scheduling the method 50 may additionally comprise a step 52 of configuring a classified cell-border mobile terminal 11-2 to perform measurements using the radio resources 21 which are at least partially suspended from transmission by the neighbor cell 18, 28, and to configure a classified cell-center mobile terminal 11-1 to perform measurements using the radio resources 23 which are not suspended from transmission by the neighbor cell 18, 28.

Accordingly, a mobile terminal 11 may execute a method comprising performing measurements using the radio resources 21 which are at least partially suspended from transmission by the neighbor cell 18, 28, if the mobile terminal has been classified as a cell-border mobile terminal 11-2, and using the radio resources 23 which are not suspended from transmission by the neighbor cell 18, 28, if the mobile terminal has been classified as a cell-center mobile terminal 11-1. The method related to the mobile terminal further comprises communicating information indicative of the measurements and/or its classification from the mobile terminal the cell's serving base station 15.

Embodiments of the aforementioned apparatuses may comprise a signal processor, respectively, executing a computer program having a program code for performing or supporting embodiments of the above described method when the computer program is executed on said processor. Hence, embodiments may provide a computer program having a program code for performing one of the above described methods when the computer program is executed on a computer or processor. A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

To summarize, embodiments of the present invention may reduce the CQI feedback rate transmitted on the UL up to 50%. At the same time, the scheduling concept shows a good downlink performance. Fig. 4 shows a comparison of cell border throughput over spectral efficiency of a system with and without ABS-based eICIC. For ABS, a high bias of 15 dB has been chosen, in order to push many mobiles into the pico cell. For the non-ABS case, the bias is 0dB in order to avoid bad channel qualities for picocell border mobiles. Based on the described ABS scheduling concept, gains of 50% in cell border throughput and 20% in spectral efficiency may be obtained.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing a certain function, respectively. Hence, a "means for s.th." may as well be understood as a "means being adapted or suited for s.th.". A means being adapted for performing a certain function does, hence, not imply that such means necessarily is performing said function (at a given time instant).

Functions of various elements shown in the figures, including any functional blocks may be provided through the use of dedicated hardware, as e.g. a processor, as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. An apparatus (10) for scheduling a mobile terminal (11) associated to a serving cell (12; 22) of a cellular communication system, the apparatus comprising:
classification means (13) adapted to classify the mobile terminal into a cell-center or cell-border mobile terminal (11-1; 11-2) based on a quality of a wireless communication channel between the mobile terminal and the serving cell (12; 22) and based on a quality of a wireless communication channel between the mobile terminal and a neighbor cell (18; 28);
scheduling means (17) adapted to schedule a classified cell-border mobile terminal (11-2) using radio resources (21) which are at least partially suspended from transmission by the neighbor cell (18; 28), and to schedule a classified cell-center mobile terminal (11-1) using radio resources (23) which are not suspended from transmission by the neighbor cell (18; 28).

2. The apparatus (10) according to claim 1, wherein the classification means (13) is adapted to classify a mobile terminal as a cell-center mobile terminal (11-1), if a receive signal level of the serving cell (12; 22) at the mobile terminal exceeds the receive signal level of the strongest interfering neighbor cell (18; 28) by a predetermined value (31), and to classify the mobile terminal as a cell-border mobile terminal (11-2) otherwise.

3. The apparatus (10) according to claim 1, wherein the classification means (13) is adapted to receive a report from an associated mobile terminal (11-1; 11-2), the report being indicative of the mobile terminal's change from a classified cell-center mobile terminal to a classified cell-border mobile terminal, or vice versa.

4. The apparatus (10) according to claim 1, further comprising measurement configuration means (19) adapted to configure a classified cell-border mobile terminal (11-2) to perform measurements using the radio resources (21) which are at least partially suspended from transmission by the neighbor cell (18; 28), and to configure a classified cell-center mobile terminal to perform measurements using the radio resources (23) which are not suspended from transmission by the neighbor cell (18; 28).

5. The apparatus (10) according to claim 4, wherein the measurement configuration means (19) is adapted to configure the cell-border mobile terminal (11-2) to perform channel quality measurements using the radio resources (21) which are at least partially suspended from transmission by the neighbor cell (18; 28), the channel quality measurements being indicative of a quality of a wireless channel between the cell-border mobile terminal (11-2) and the cell's serving base station (15), and wherein the measurement configuration means (19) is adapted to configure the cell-center mobile terminal (11-1) to perform channel quality measurements using the radio resources (23) which are not suspended from transmission by the neighbor cell (18; 28), the channel quality measurements being indicative of a quality of a wireless channel between the cell-center mobile terminal (11-1) and the cell's serving base station (15).

6. The apparatus (10) according to claim 5, wherein the measurements correspond to intra-frequency RLM-, RRM- or CSI-measurements and the radio resources (21) which are at least partially suspended from transmission correspond to an ABS pattern utilized by the neighbor cell (18; 28).

7. The apparatus (10) according to claim 1, wherein the neighbor cell (18; 28) corresponds to the strongest interfering cell neighboring the serving cell, wherein an interference level for the cell-center or cell-border mobile terminals (11-1; 11-2) originating from signals of the strongest interfering cell is higher than an interference level of another neighboring cell.

8. The apparatus (10) according to claim 1, wherein the radio resources (21; 23) comprise frequency and/or time resources utilized by the neighbor cell (18; 28).

9. The apparatus (10) according to claim 8, wherein the time resources correspond to a plurality of sub-frames (21; 23) of a radio frame structure (20), and wherein the radio resources (21) which are at least partially suspended from transmission correspond to sub-frames during which at least some of the radio resources of the neighbor cell (18; 28) are suspended from transmission.

10. The apparatus (10) according to claim 1, wherein the scheduling means (17) is adapted to schedule the classified cell-border mobile terminal (11-2) during ABS sub-frames (21) of the neighbor cell (18; 28) and to schedule the classified cell-center mobile terminal (11-1) during non-ABS sub-frames (23) of the neighbor cell (18; 28).

11. The apparatus (10) according to claim 1, wherein the cellular communication system is an LTE or LTE-A system and/or wherein the serving cell (12; 22) is a picocell and the neighbor cell (18; 28) is a macrocell.

12. A mobile terminal (11), which may be associated to a serving cell (12; 22) of a cellular communication system, the mobile terminal comprising:
measurement means adapted to perform measurements using radio resources (21) which are at least partially suspended from transmission by a neighbor cell (18; 28) if the mobile terminal (11) has been classified as a cell-border mobile terminal (11-2), and to perform measurements using radio resources (23) which are not suspended from transmission by the neighbor cell (18; 28) if the mobile terminal has been classified as a cell-center mobile terminal (11-1), wherein the classification is based on a quality of a wireless communication channel between the mobile terminal and the serving cell (12; 22) and based on a quality of a wireless communication channel between the mobile terminal and the neighbor cell (18; 28); and
communication means adapted to communicate information indicative of the measurements and/or the classification from the mobile terminal the cell's serving base station (15).

13. The mobile terminal (11) for according to claim 1, wherein the mobile terminal is adapted to be classified as a cell-center mobile terminal (11-1), if a receive signal level of the serving cell at the mobile terminal is higher than a receive signal level of the strongest interfering neighbor cell by a predetermined value (CBW), wherein the mobile terminal (11) is adapted to be classified as a cell-border mobile terminal (11-2) otherwise, and wherein the communication means is adapted to transmit a report to the cell's serving base station (15), the report being indicative of the mobile terminal's change from a classified cell-center mobile terminal to a classified cell-border mobile terminal, or vice versa.

14. A method (50) for scheduling a mobile terminal (11) associated to a serving cell (12; 22) of a cellular communication system, the method comprising:
classifying (51) the mobile terminal into a cell-center or cell-border mobile terminal (11-1; 11-2) based on a quality of a wireless communication channel between the mobile terminal and the serving cell (12; 22) and based on a quality of a wireless communication channel between the mobile terminal and a neighbor cell (18; 28);
scheduling (53) a classified cell-border mobile terminal (11-2) using radio resources (21) which are at least partially suspended from transmission by the neighbor cell (18; 28), and to schedule a classified cell-center mobile terminal (11-1) using radio resources (23) which are not suspended from transmission by the neighbor cell (18; 28).

15. A computer program having a program code for performing the method of claim 14, when the computer program is executed on a computer or processor.
